(19) **Europäisches Patentamt / European Patent Office / Office européen des brevets**

(11) **EP 1 509 380 B1**

(12) **EUROPEAN PATENT SPECIFICATION**

(45) Date of publication and mention
of the grant of the patent:
**12.12.2007 Bulletin 2007/50**

(21) Application number: **03730568.7**

(22) Date of filing: **22.05.2003**

(51) Int Cl.:
**B29C 47/90** (2006.01)    **B29C 47/02** (2006.01)
**G02B 6/02** (2006.01)

(86) International application number:
**PCT/JP2003/006381**

(87) International publication number:
**WO 2003/099540 (04.12.2003 Gazette 2003/49)**

(54) **PLASTIC OPTICAL PRODUCT, PLASTIC OPTICAL FIBER, APPARATUS FOR MANUFACTURING PLASTIC OPTICAL PART, AND METHOD FOR MANUFACTURING PLASTIC OPTICAL PART AND PLASTIC OPTICAL PRODUCT**

OPTISCHES KUNSTSTOFFPRODUKT, OPTISCHE KUNSTSTOFFFASER, VORRICHTUNG ZUR HERSTELLUNG EINES OPTISCHEN KUNSTSTOFFTEILS UND VERFAHREN ZUR HERSTELLUNG EINES OPTISCHEN KUNSTSTOFFTEILS UND EINES OPTISCHEN KUNSTSTOFFPRODUKTS

PRODUIT OPTIQUE EN PLASTIQUE, FIBRE OPTIQUE EN PLASTIQUE, APPAREIL ET PROCEDE DE FABRICATION DE PARTIE OPTIQUE EN PLASTIQUE ET DE PRODUIT OPTIQUE EN PLASTIQUE

(84) Designated Contracting States:
**AT BE BG CH CY CZ DE DK EE ES FI FR GB GR HU IE IT LI LU MC NL PT RO SE SI SK TR**

(30) Priority: **28.05.2002 JP 2002153918**
**28.11.2002 JP 2002346250**

(43) Date of publication of application:
**02.03.2005 Bulletin 2005/09**

(73) Proprietor: **FUJIFILM Corporation**
**Minato-ku**
**Tokyo (JP)**

(72) Inventors:
• **OGURA, Tohru,**
**c/o Fuji Photo Film Co., Ltd.**
**Fujinomiya-shi, Shizuoka 418-8666 (JP)**
• **MIYOSHI, Takahito,**
**c/o Fuji Photo Film Co., Ltd.**
**Fujinomiya-shi, Shizuoka 418-8666 (JP)**

• **SHIROKURA, Yukio,**
**c/o Fuji Photo Film Co., Ltd.**
**Fujinomiya-shi, Shizuoka 418-8666 (JP)**

(74) Representative: **Klunker . Schmitt-Nilson . Hirsch**
**Winzererstrasse 106**
**80797 München (DE)**

(56) References cited:
**EP-A- 0 629 493          US-A- 3 472 921**
**US-A- 5 676 892**

• **PATENT ABSTRACTS OF JAPAN vol. 1996, no. 06, 28 June 1996 (1996-06-28) & JP 08 054520 A (SUMITOMO ELECTRIC IND LTD;OTHERS: 01), 27 February 1996 (1996-02-27)**
• **DATABASE WPI Section Ch, Week 200222 Derwent Publications Ltd., London, GB; Class A32, AN 2002-170396 XP002252888 -& RU 2 176 596 C (DEBERDEEV RUSTAM JAKUBOVICH; SABIROV RINAT ABDULLOVICH; JUSUPOV NAIL KH), 10 December 2001 (2001-12-10)**

**Description**

Technical Field

The present invention relates to a method for manufacturing a plastic optical product, such as a plastic optical fiber, and to an apparatus for manufacturing a plastic optical product.

Background Art

Plastic optical parts, compared to silica optical parts, are advantageous in processing facility and the price. Plastic materials have been applied to optical parts, such as an optical fiber. The plastic optical fiber is more flexible and lighter than the silica optical fiber, so the plastic optical fiber is advantageous in manufacturing a large optical fiber at a low price. Due to the larger transmission loss than the silica optical fiber, the plastic optical fiber is preferably applied to the short distance optical communication in which the transmission loss is non-problematic.

The plastic optical fiber comprises a polymer clad tube and a polymer core inside the clad tube. The clad tube is formed by extrusion from a molten thermoplastic material, such as polymethyl methacrylate (PMMA). In order to realize total internal reflection of signal light, the clad tube has a lower refractive index than the core.

The optical fiber is manufactured by drawing an optical fiber base (preform) that is produced by forming the core inside the clad tube. For instance, Japan Laid-Open Patent (JP-A) No. 2-16504 describes a manufacturing method to form the preform by concentrically extruding more than or equal to two kinds of polymers having different refractive indices. The preform is drawn in an atmosphere of 180 °C to 250 °C, so that a graded index type (GI type) plastic optical fiber is produced. JP-A 9-133818 describes a method to form the preform by simultaneously extruding the clad tube and the core. In addition, JP-A 8-201637 discloses a method to produce the preform by dropping an undiluted solution to polymerize the core inside the clad tube that is formed by extrusion.

While the clad tube is formed, molten polymer is forwarded to a cooler device for solidification just after the molten polymer is extruded. Thus, the thickness of the clad tube becomes uneven. Although the molten polymer is extruded vertically to prevent the clad tube from being bent by its gravity during extrusion process, the thickness of the clad is changed because of fluctuation of the shape of the extrusion die and the extrusion speed.

If the thickness of the clad tube is not even, the diameter of the plastic optical fiber with such clad tube is varied. It is difficult to cover such optical fiber and to connect such optical fiber to other component for optical transmission. Moreover, since the optical fiber with uneven diameter causes high transmission loss, it is necessary to decrease unevenness of the diameter in order to replace the silica optical fiber with the plastic optical fiber in the optical transmission system.

EP-A-0 629 493 discloses a process for producing a cured composite, e.g. a light pipe. The cured composite consists of a cladding and a core. The composite is formed by concurrently and coaxially extruding a molten cladding polymer forming a tubular cladding, and a crosslinkable core mixture filling the tubular cladding, and by curing the crosslinkable core mixture within the tubular cladding. The quality of the outer cladding surface may be improved by sizing techniques incorporating the use of means like horizontal extrusion, a water bushing or vacuum sizing techniques.

JP 08 054 520 A discloses a method for manufacturing a plastic optical product having a hollow shape, i.e. plastic optical fiber preform, by introducing a polymerizable material into the inside of a hollow cylindrical body and by rotating the hollow cylindrical body. The monomeric material polymerizes within the rotating hollow cylindrical body, thus forming a tubular product.

US-A-3 472 921 discloses a method of making optical fibers wherein a preformed tubular thermoplastic jacket is placed around an extrusion tube and a thermoplastic core material is extruded through the extrusion tube while moving the tubular jacket in the flow direction of the core material. In order to ensure good light transmission characteristics, local imperfections in the interface between the light transmissive core and the jacket are to be avoided. Therefore, vacuum is applied during the extrusion process to exclude gases from the interior of the jacket and to help prevent the formation of bubbles at the interface between the jacket and the central core.

RU 2 176 596 C1 discloses a method and apparatus for making plastic tubes with colored stripes. A tubular blank, i.e. a tube without stripes, is extruded, and a preliminary prepared colored strip film is pressed into the outer surface of the tubular blank by applying vacuum between the tubular blank and the colored strip film.

An object of the present invention is to provide a method for manufacturing a plastic optical product that is suitable for the clad tube with low variance in thickness, and an apparatus for manufacturing the plastic optical product.

In one embodiment the plastic optical product is a plastic optical fiber.

Disclosure of Invention

According to the present invention, a hollow plastic optical product is manufactured by the following steps.

(a) melting a polymer;

(b) extruding the polymer from an extrusion die to obtain a hollow molten polymer;

(c) correcting the shape of the molten polymer through a molding die, and

(d) solidifying said molten polymer to obtain a plastic optical part having a hollow shape.

In the preferred embodiment, a decompression pump is connected to the molding die through a plurality of holes formed in an inner surface of the molding die. When the decompression pump is driven, the chamber of the molding die is decompressed such that the molten polymer is tightly fit to the inner surface of the molding die. The air pressure near the inner surface of the molding die is preferably 20 kPa to 50 kPa.

The extrusion speed of the molten polymer in the molding die is preferably equal to or more than 0.1 m/min and equal to or less than 10 m/min. The temperature of the molten polymer is preferably equal to or more than (Tg+30) °C and equal to or less than (Tg+120) °C, wherein Tg is the glass transition temperature of the polymer. Moreover, the apparent viscosity of the molten polymer near the exit of the extrusion die is preferably 500 to 10000 Pa·s.

The distance between an exit of said extrusion die and an entrance of said molding die is preferably more than 0 mm and less than 20 mm. It is possible to fix a throat member to an entrance of the molding die in order to keep the thickness of the optical part uniform. The molten polymer is cooled to become solid after the molding die.

Since the shape of the plastic optical part is corrected by the molding die, it is possible to decrease the error in thickness of the hollow plastic optical part.

An embodiment of the plastic optical product is manufactured by injecting polymerized material inside a hollow area of said plastic optical part. It is possible to manufacture a plastic optical fiber by drawing the plastic optical product as a preform. The plastic optical part is a clad of the plastic optical fiber, and the polymerized material is a core of the plastic optical fiber.

The optical characteristics of the plastic optical fiber are improved since the molding die reduces the error in the thickness of the clad.

Brief Description of Drawings

FIG. 1 is a schematic view of a manufacture line of a plastic optical product;

FIG. 2 is a partial exploded perspective view of a molding die in the manufacture line of FIG. 1;

FIG. 3 is a sectional view of the molding die of FIG. 2;

FIG. 4 is a sectional view of the molding die of FIG. 2, taken along the line IV-IV;

FIGs. 5A, 5B and 5C are partial cross sections of the molding die according to another embodiment; and

FIG. 6 is a schematic view of the manufacture line according to still another embodiment.

Best Mode for Carrying Out the Invention

A manufacture line of a plastic optical fiber having a clad tube and a core is described as the preferred embodiments. These embodiments described below do not unnecessary limit the scope of the claims of the present invention.

(The clad tube of the plastic optical fiber)

The clad tube is formed by extrusion of a molten thermoplastic material. The refractive index of the clad must be lower than that of the core so that transmission light in the core is totally reflected at the interface between the core and the clad tube. An amorphous material with high durability and heat-resistance is preferably used as the clad tube. Examples of the monomer of the clad tube are methyl methacrylate (MMA), sthylene, methyl methacrylate deuterium, trifluoro ethyl methacrylate, hexafluoroisoprophyl-2-fluoroacrylate, but not limited to them. One of these monomers is polymerized into a homo-polymer as the raw material of the clad tube.

Two or more kinds of monomers may be polymerized,into a copolymer as the raw material of the clad tube. It is also possible to form the clad from a compound of homo-polymers of two or more kinds of monomers. The clad tube is preferably formed from polymethyl methacrylate (PMMA) that is prepared by polymerization of MMA. Among various structural isomer of PMMA, the one of syndiotactic structure, having the glass transition temperature of 105 °C to 120 °C, is more preferable in terms of facility in the molding process. It is also preferable to form the clad tube from the same raw material of the core in terms of the transparency of the plastic optical fiber. The clad tube may have two or more layers for the purpose of decrease in transmission loss and bent loss, prevention of moisture absorption, improvement of the strength, and so forth. One example of such clad tube is consisted of an inner layer of PMMA and an outer layer of polyvinylidene fluoride (PVDF).

The average polymerization degree of the clad tube is preferably 500 to 5000, more preferably 700 to 3000, and most preferably 800 to 2000. With the preferred average polymerization degree described above, the preform is stably drawn to form the plastic optical fiber. The amount of the residual raw material in the polymer is preferably equal to and less than 1.0 percent by mass, and more preferably, equal to and less than 0.5 percent by mass. These numerical values above does not unnecessary limit the characteristics of the polymer of the clad tube.

(The core of the plastic optical fiber)

Any raw materials are used for the core as long as the core is transparent to transmission light. It is preferable to use a polymer with low transmission loss to transmission light. Examples of the monomer as the raw material are methyl methacrylate (MMA), methyl methacrylate deuterium, trifluoro ethyl methacrylate, hexafluoroisoprophyl-2-fluoroacrylate, but not limited to them. One of these monomers is selected and polymerized into homo-polymer as the core material. The homo-polymer may be produced after forming oligomer from the monomer. The core may be formed from a copolymer of two or more kinds of monomers. It is also possible to form the core from a compound of homo-polymers.

The core is preferably formed from polymethyl methacrylate (PMMA) that is prepared by polymerization of MMA with high bulk polymerization ability. It is also possible to use a homo-polymer, a copolymer and a compound polymer that have a monomer in which a hydrogen atom (H) is replaced with a deuterium atom (D) or a halogen atom (X). The CH link in the core causes transmission loss in a particular wavelength range. Replacement of the hydrogen atom causes such wavelength range to shift toward the longer wavelength side, so the transmission loss in the particular wavelength range becomes smaller.

(Additives)

Polymerization initiators and polymerization modifier (mercapto compounds as a chain transfer agent, such as n-butylmercaptan ($CH_3$-$(CH_2)_3$-SH) and n-laurylmercaptan ($CH_3$-$(CH_2)_{11}$-SH)) may be added to the monomer when the monomer is polymerized into the polymer. Such additives are effective to control the polymerization state and the polymerization speed, and to control the molecular weight suitable for the thermodrawing process to form the plastic optical fiber.

The polymerization initiator is selectively used in accordance with the polymerization state and the monomer to be used. Examples of the polymerization initiators for the thermopolymerization are benzoyl peroxide (BPO), t-butyl-peroxi-2-ethylhexanate (PBO), di-t-butylperoxide (PBD), t-butylperoxi isoprophylcarbonate (PBI), n-buthyl-4,4-bis(t-butylperoxi)paralate, but not limited to them. More than one kind of polymerization initiator may be mixed.

The polymerization modifier (chain transfer agent) is used for adjusting the molecular weight, and selected in accordance with the kind of the monomer and polymerization degree of the polymer. In case of methyl methacrylate compound as the monomer, examples of the polymerization modifiers are alkylmercaptans (such as n- butylmercaptan, n-pentylmercaptan, n-octylmercaptan, n-laurylmercaptan, t-dodecylmercaptan), thiophenols (such as thiophenol, m-bromothiophenol, p-bromothiophenol, m-toluenethiol, p-toluenethiol), as described in WO 93/08488. Among them, alkylmercaptans, such as n-octylmercaptan, n-laurylmercaptan and t-dodecylmercaptan, are preferable. It is possible to use the polymerization modifiers in which a hydrogen atom in CH link is replaced with a deuterium atom (D). More than one kind of polymerization modifier may be mixed. The examples of the polymerization modifier in the present invention are not limited to those above.

The graded index type (GI type) optical fiber has a core in which the refractive index changes gradually from the center to the outer surface. Compared to the optical fiber with the core of a constant refractive index, the GI type optical fiber has larger transmission capacity. The GI type optical fiber is manufactured by adding a refractive index modifier to increase the refractive index of the polymer. The monomer with the refractive index modifier is polymerized so that the core polymer contains the refractive index modifier. Any suitable materials that are coexistent with the polymer and stable under polymerization condition (heating and pressure conditions) may be used as the refractive index modifier. Examples of the refractive index modifier are benzoic ester (BEN), diphenyl sulfide (DPS), triphenyl phosphate (TPP), benzylphthalate-n-butyl (BBP), diphenyl phthalate (DPP), biphenyl (DP), diphenylmethane (DPM), tricresyl phosphate (TCP), diphenyl sulfoxide (DPSO), but not limited to them. Among them, BEN, DPS, TPP and DPSO are preferably used.

Refractive index of the plastic optical fiber is adjusted by controlling the amount and distribution of the refractive index modifier in the core. The amount of the refractive index modifier is decided in accordance with the purpose of the optical fiber and the raw material to be mixed.

The core and/or the clad tube may contain other additives to the extent that such additives do not affect light transmission ability. For instance, stabilizers may be added for the purpose of increasing the weather-proof ability and endurance. Moreover, it is possible to add a compound as an amplifier to emit pump light in response to attenuated signal light. The raw material is molded together with such additives, so that the core and/or the clad tube contain the additives.

(Manufacturing the plastic optical product)

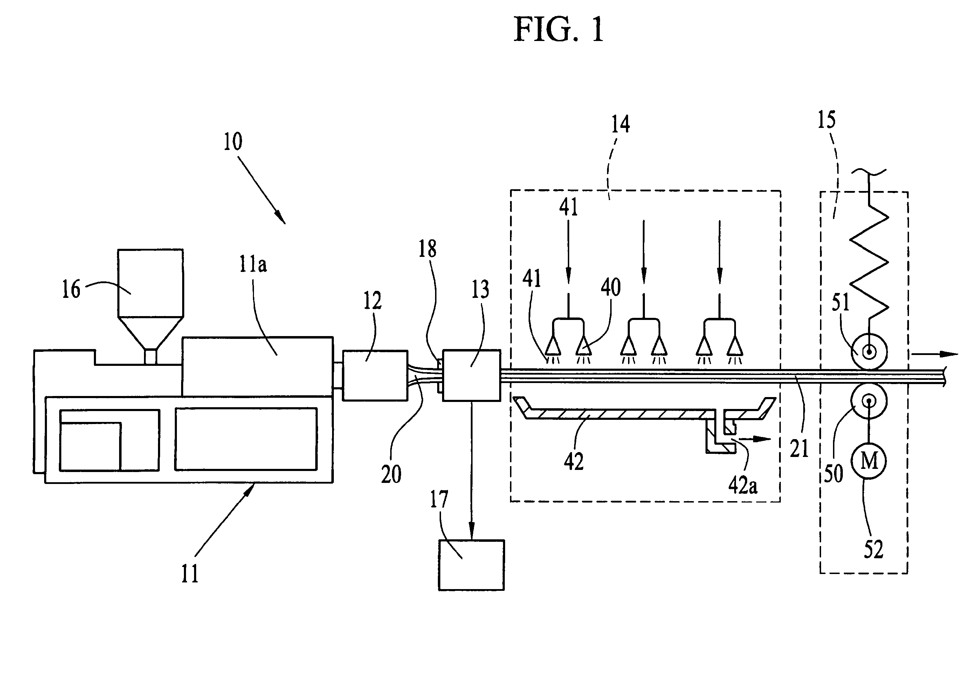

The manufacture line of the plastic optical product is depicted in FIG. 1. The manufacture line 10 includes a melt extrusion machine 11, an extrusion die 12, a molding die 13, a cooler 14 and a drawing machine 15.

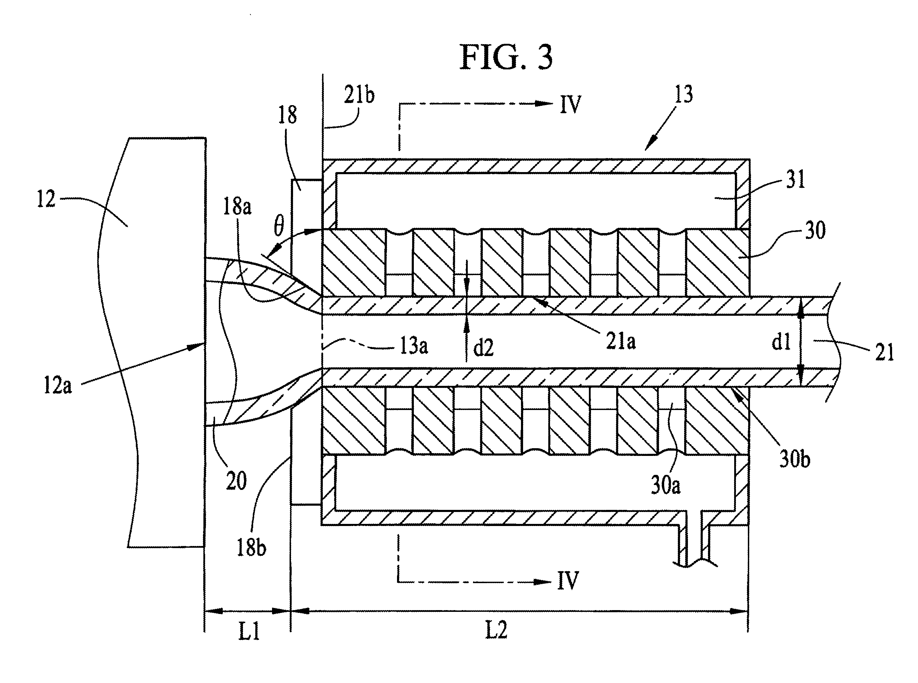

The melt extrusion machine 11 has a pellet hopper 16 to supply the polymer, such as PMMA. A single axial screw extruder (not shown) with a bent is provided in an extrusion section 11a of the melt extrusion machine 11. The polymer is melted in the extrusion section 11a. The molten polymer is forwarded to the extrusion die 12 for the extrusion process. The temperature of the molten polymer is preferably between (Tg+30) °C and (Tg+120) °C, wherein Tg is the glass transition temperature of the polymer. More preferably, the temperature of the molten polymer is between (Tg+70) °C and (Tg+90) °C. The apparent viscosity of the molten polymer near the exit 12a of the extrusion die 12 (see FIG. 3) is preferably 500 to 10000 Pa·s, and more preferably 1000 to 7000 Pa·s, and most preferably 2000 to 5000 Pa·s. The molten polymer in the extrusion die 12 is extruded through the exit 12a as a soft clad (molten resin) 20.

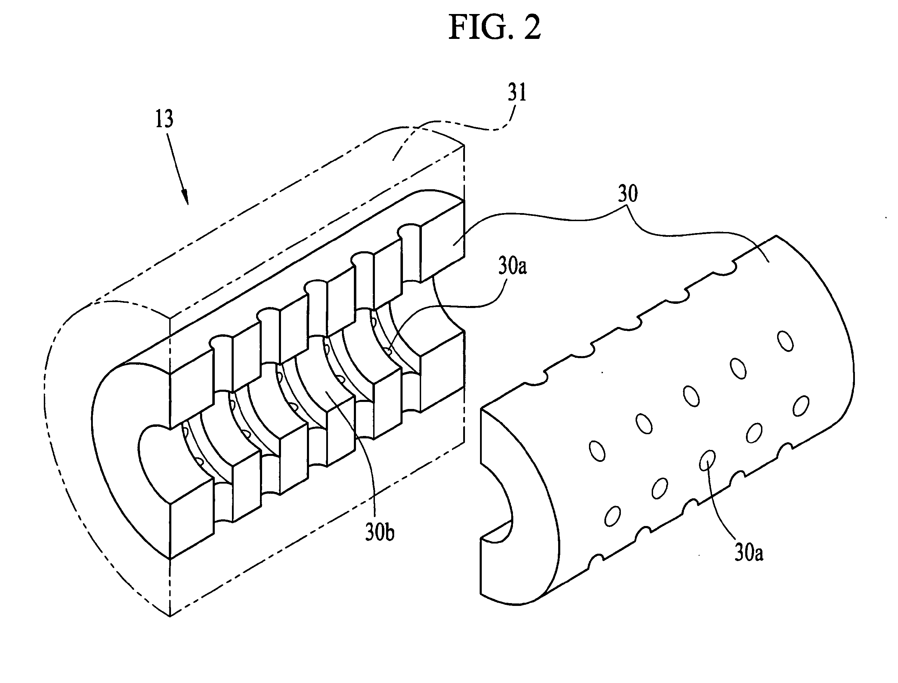

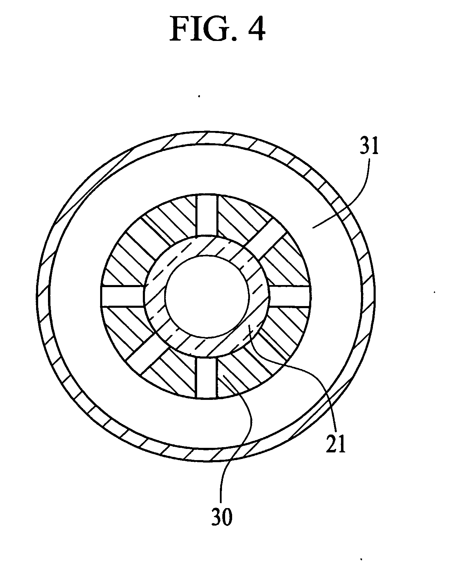

The soft clad 20 is transferred to the molding die 13. An example of the molding die 13 is shown in FIG. 2, 3 and 4, but the molding die of the present invention is not limited to the one shown in the drawings. The molding die 13 has a forming tube 30 through which the soft clad 20 is extruded. While the soft clad 20 is extruded through the forming tube 30, the shape of the soft clad 20 is corrected so that the clad tube 21 is obtained. The extrusion speed S (m/min) of the soft clad 20 in the forming tube 30 is preferably 0.1 = S = 10.0, more preferably 0.3 = S = 5.0, and most preferably 0.4 = S = 1.0. The extrusion speed is not limited to the preferable range above.

A decompression chamber 31 is preferably connected to the forming tube 30 through suction holes 30a formed in the forming tube 30. When a vacuum pump 17 (see FIG. 1) connected to the decompression chamber 31 is driven, air pressure in the decompression chamber 31 is decreased. Then, the outer surface 21a of the clad tube 21 is closely fitted to the inner wall (molding wall) 30b of the forming tube 30, so that the uniformity of the thickness of the clad tube 21 is improved. The air pressure in the decompression chamber 31 is preferably 20 kPa to 50 kPa, but not limited to this range.

As shown in FIG. 3, a throat member 18 to regulate the diameter of the clad 21 is preferably attached to a lateral side 13a of the molding die 13 in order to decrease the change of the thickness of the clad 21. The throat member 18 may be integrated with the molding die 13. A plane angle θ in FIG. 3 is defined by a tangential plane 18a of the throat member 18 with the soft clad 20 and the plane 21b perpendicular to the extruding direction of the clad 21. The condition of 30° = θ = 80° is preferable to decrease pressure to cause non-uniformity of the clad shape, but it is possible to set the plane angle outside this range.

The distance L1 between the exit 12a of the extrusion die 12 and the entrance of the molding die 13 is within the range 0 mm < L1 < 20 mm, it is possible to decrease pressure to cause non-uniformity of the clad shape. Moreover, the length L1 within this range prevents the soft clad 20 from being bent vertically due to its gravity. Note that the entrance of the molding die 13 is defined as an outer surface 18b of the throat member 18, and defined as the lateral side 13a of the molding die 13 when the throat member 18 is not attached.

The length L2 is defined as the length of the molding die 13 (and the throat member 18 if attached) in the extruding direction. In order to decrease fluctuation in the thickness d2 of the clad tube 21, the length L2 is preferably equal to or more than 4 times as the outer diameter d1 of the clad tube 21. More preferably, the length L2 is equal to or more than 5 times, and most preferably, equal to or more than 8 times as the outer diameter d1. These relationships do not unnecessary limit the invention.

The outer diameter d1 of the clad tube 21 is preferably equal to or less than 50 mm. More preferably, the outer diameter d1 is 10 mm = d1 = 30 mm, and most preferably, 15 mm = d1 = 25 mm. The thickness d2 of the clad 21 is preferably 2 mm = d2 = 20 mm, more preferably 4 mm = d2 = 15 mm, and most preferably, 4 = d2 = 10 mm. The diameter d1 and the thickness d2 may be outside of these ranges.

In FIG. 1, the clad tube 21 is sent to the cooler 14 from the molding die 13. The cooler 14 has plural nozzles 40 to apply coolant 41 to the clad tube 21, so that the clad tube 21 is solidified. The coolant 41 is collected in the receiver 42, and drained through a drainpipe 42a. In terms of saving the resources, coolant 41 is preferably reused after drainage. Any type of the cooler 14 is applicable to the present invention so long as the clad tube 21 is cooled.

The clad tube 21 in the cooler 14 is pulled toward the drawing machine 15 that has a drive roller 50 and a pressure roller 51. A motor 52 is connected to the drive roller 50 to adjust the drawing speed of the clad tube 21. The pressure roller 51, faced to the drive roller 50, presses the clad tube 21 to adjust the position of the clad tube 21 in the direction perpendicular to the drawing direction. It is possible to decrease fluctuation in the thickness of the clad tube 21 by adjusting the drawing speed and the position of the clad tube 21.

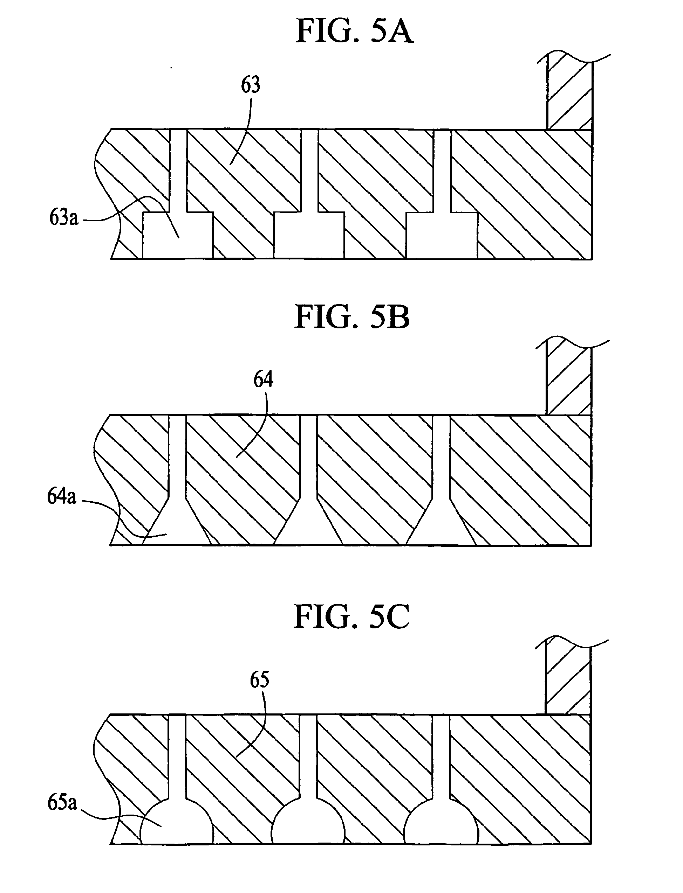

FIG. 5A, 5B and 5C illustrate other embodiments of the suction holes of the forming tube. FIG. 5A is an example of a forming tube 63 having suction holes 63a of step cross-section. FIG. 5B is an example of a forming tube 64 having suction holes 64a of triangular cross-section. FIG. 5C is an example of a forming tube 65 having suction holes 65a of substantially hemisphere cross-section. Other shape of the suction hole, such as rectangular cross-section, is also applicable to the present invention.

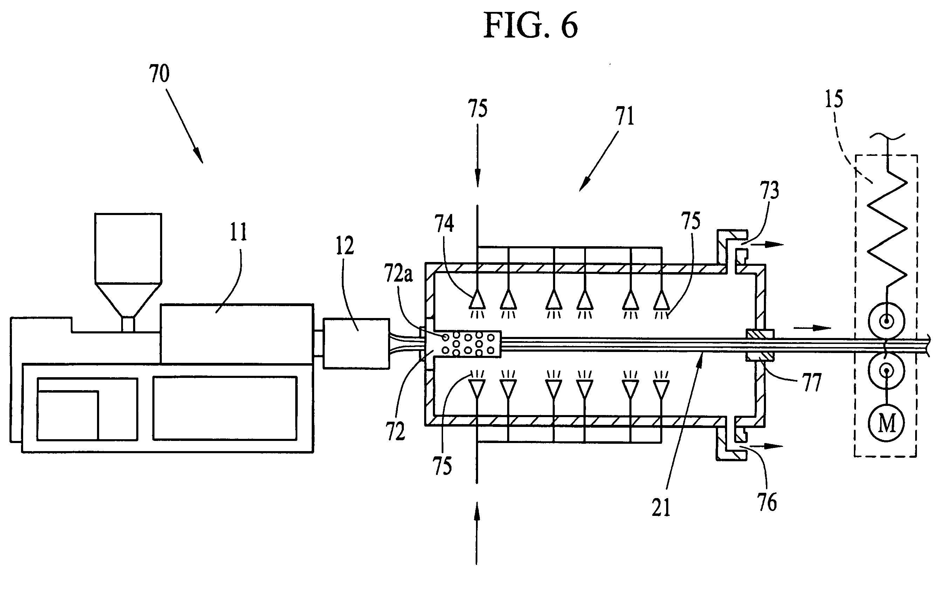

FIG. 6 shows another embodiment of the manufacture line of the plastic optical product. The manufacture line 70 comprises the melt extrusion machine 11, the extrusion die 12, a cooler 71 and the drawing machine 15. The cooler 71 has a forming tube 72 with plural suction holes 72a. The forming tube 30 shown in FIG. 2, 3 and 4 and the forming tubes 63 to 65 shown in FIG. 5A, 5B and 5C are applicable to the forming tube 72 of this embodiment.

A vacuum pump (not shown) is connected to the cooler 71 via a decompression hole 73 to decrease the inner air pressure of the cooler 71. The cooler 71 has plural nozzles 74 to supply coolant 75 to the clad tube 21 for solidification. The coolant 75 is drained through a drainpipe 76 formed in a bottom of the coolant 71.

Since the manufacture line 70 is easily prepared by adding the forming tube 72 to a manufacture line of other plastic materials, such as vinyl chloride pipes, it is advantageous in decreasing the manufacture cost of the plastic optical product. Moreover, since the forming tube 72 is disposed in the cooler 71, it is not necessary to prepare an additional area for the forming tube 72. In case of preliminary experiments to find a manufacturing condition, such preliminary experiments are carried out by changing the forming tube 72 in accordance with the manufacturing conditions. Such feature is advantageous in decreasing the cost of the preliminary experiment.

The clad tube of the optical fiber, as an example of a hollow plastic optical product, is manufactured in this way described above. The hollow plastic optical product is applicable to other purpose than a plastic optical fiber. Next, manufacture of the preform having a core inside the clad tube is described below.

(Manufacturing the preform)

The preform is manufactured by forming the core inside the clad tube manufactured by the method described above. Preferably, one end of the clad is covered so as to inject the monomer (the raw material of the core) inside the clad tube. It is preferable to stick the cover tightly to the end of the clad tube. The cover, preferably the same polymer as the clad tube, is formed by holding the clad tube vertically in a container, and by polymerizing the monomer poured in the container.

The monomer as the core raw material, injected inside the hollow part of the clad tube, is subject to interfacial polymerization to form the core. The core raw material is preferably the same monomer as the raw material of the clad tube. Additives, such as the polymerization initiators and the polymerization modifiers, may be added to the core raw material. The amount of the additives is adjusted in accordance with the kind of the monomer. The amount of the polymerization initiator is preferably 0.005 to 0.050 percent by mass of the monomer, and more preferably, 0.010 to 0.020 percent by mass of the monomer. The amount of the chain transfer agent is preferably 0.10 to 0.40 percent by mass of the monomer, and more preferably, 0.15 to 0.30 percent by mass of the monomer.

The graded refractive index (GI) type optical fiber is manufactured by adding the refractive index modifier or by polymerizing two or more kinds of monomers. The polymerization of the monomer starts on the inner wall of the clad tube, and is spread toward the center of the clad tube. In case of polymerizing two or more kinds of monomers, the monomer with higher affinity to the clad polymer is mainly polymerized near the inner wall of the clad tube, so that density of the monomer with high affinity becomes larger near the clad tube. The density of the monomer with higher affinity becomes small gradually as it gets closer to the center of the core. Since the composition of the monomers is changed according to the radius of the core, the refractive index in the core is gradually changed.

In case of polymerizing the monomer with the refractive index modifier, the inner wall of the clad tube is dissolved by the monomer solution (core solution), as described in WO 93/08488. Then, while the dissolved polymer is swelled to form a gel, the monomer solution is polymerized. In the polymerization, since the monomer has higher affinity to the clad polymer than the refractive index modifier, density of the refractive index modifier becomes smaller near the inner wall of the clad tube. Density of the refractive index modifier becomes large gradually as it gets closer to the center of the core. Since the refractive index modifier is distributed in the core, refractive index in the core is gradually changed.

When refractive index distribution is introduced in the core, thermal behavior of the monomer in the core changes in accordance with the density of the refractive index modifier. If the monomer is polymerized at a constant temperature, the relaxation ability in response to the shrinkage of the monomer is changed to cause bubbles and/or microscopic holes in the preform.

Moreover, it is desirable to polymerize at a proper temperature in accordance with the kind of the core monomer. Polymerization with low temperature decreases polymerization efficiency of the core monomer and incomplete polymerization to make the transmittance worse. On the other hand, high initial polymerization temperature causes bubbles in the core because of incomplete relaxation in response to volume shrinkage. With MMA as the raw material of the core, initial polymerization temperature is preferably 50 ° C to 150 °C, and more preferably, 80 °C to 120 °C. It is effective in decreasing the bubbles to dehydrate and/or degas the monomer in a low-pressure atmosphere before injecting the monomer in the clad tube.

The polymerization initiator, having a ten-hour half-life temperature more than or equal to the boiling point of the monomer, is preferably used in polymerizing the monomer. It is preferable to polymerize the monomer at the initial polymerization temperature for a period that is equal to or more than ten percents of the half-life period of the polymerization initiator. The subsequent polymerization period is preferably equal to or more than the half-life period of the polymerization initiator. Moreover, it is preferable to carry out the subsequent polymerization at a temperature equal to or more than Tg and equal to or less than (Tg+40) °C. The temperature Tg is the glass transition temperature of the core monomer. Under these conditions, the initial polymerization speed is decreased enough for relaxation of the monomer in response to volume shrinkage. As a result, the amount of the bubbles in the preform is reduced.

When MMA is used as the core monomer, the examples of the polymerization initiators with a ten-hour half-life temperature more than or equal to the boiling point of the monomer are PBD and PHV. With PBD as the polymerization initiator, it is preferable to keep the initial polymerization temperature of 100 °C to 110 °C for 48 to 72 hours, and to keep the subsequent polymerization temperature of 120 ° C to 140 ° C for 24 to 48 hours. When PHV is uses as the polymerization initiator, it is preferable to keep the initial polymerization temperature of 100 ° C to 110 ° C for 4 to 24 hours, and to keep the subsequent polymerization temperature of 120 °C to 140 °C for 24 to 48 hours. The polymerization temperature should be increased as rapid as possible, either gradually or continuously.

It is also possible, during polymerization, to pressurize the core liquid as described in JP-A 9-269424, or to decrease the pressure of the core liquid as described in WO 93/08488. Note that the term "pressurized polymerization" means polymerization in a pressurized atmosphere. In pressurized polymerization, the plastic cylindrical tube as the clad tube may be held in a holder after injecting the monomer as the core raw material inside the cylindrical tube, for example. The plastic cylindrical tube is inserted in a hollow part of the holder that has a similar shape as the plastic cylindrical tube. The holder holds the cylindrical tube so as to support the shrinkage of the clad during polymerization without being deformed. Thus, the hollow part of the holder is preferably larger than the diameter of the cylindrical tube, so that the holder supports the cylindrical tube loosely. The size of the hollow part (inner diameter if cylindrical holder is used) is preferably 0.1 % to 40 % larger than the outer diameter of the cylindrical tube, and more preferably, 10 % to 20 % larger.

The holder with the cylindrical tube may be set in a polymerization chamber during pressurized polymerization. The axial direction of the cylindrical tube in the polymerization chamber is preferably parallel to the vertical direction. The cylindrical tube in the polymerization chamber is pressurized to polymerize the core monomer in the atmosphere of inert gas, such as nitrogen and argon. The air pressure in the polymerization chamber during the polymerization is preferably 0.05 to 1.00 Mpa.

In this way, the preform with the core and the clad is obtained. Besides thermal polymerization, it is possible to polymerize the monomer by applying ultraviolet rays.

(Product embodiments made from the plastic optical product)

The preform is sliced into planer lens elements, or heated and drawn into a plastic optical fiber. It is also possible to form the GI type plastic optical fiber that has refractive index distribution in the core. Since the molding die improves the uniformity of the thickness of the clad (plastic cylindrical tube) the plastic optical fiber with higher transmission capacity is realized. The preform is used to form other optical products, such as optical lens and optical waveguides.

The optical data transmission system with the plastic optical fiber (optical fiber cable) comprises kinds of optical components, such as light emitting elements, light receiving elements, optical data buses, optical star couplers, optical signal processing devices and optical light connector. The optical fibers, manufactured by other process than the method described above, may be added to the system. Any known techniques described in "Basic and Practice of Plastic Optical Fiber" (published by NTS Co. , LTD.) are applied to the optical components of the system. Other examples for the optical components are optical data buses described in JP-A 10-123350 and JP-A 2002-090571, optical couplers described in JP-A 2001-074971, JP-A 2000-329962, JP-A 2001-074966, JP-A 2001-074968, JP-A 2001-318263 and JP-A2001-311840, optical star couplers described in JP-A 2000-241655, optical signal transmission devices and optical data bus systems described in JP-A 2002-062457, JP-A 2002-101044 and JP-A 2001-305395, optical signal processing devices described in JP-A 2002-023011, optical signal cross-connection systems described in JP-A 2001-086537, optical transmission systems described in JP-A2002-026815, and multi function systems described in JP-A 2001-339554 and JP-A 2001-339555.

(Manufacture process of the plastic optical fiber)

The plastic optical fiber as the plastic optical product is manufactured by drawing the heated pre-from. The heating temperature, decided in accordance with the polymer of the preform, is preferably 180 °C to 250 °C. The condition for drawing the preform, such as tension and temperature, is decided in accordance with the kind of the polymer of the preform and the diameter of the plastic optical fiber. For instance, tension to draw the preform is preferably equal to or more than 10 g in order to orientate the molten preform, as described in JP-A 7-234322. Moreover, tension is preferably equal to or less than 100 g in order not to generate stress in the plastic optical fiber, as described in JP-A 7-234324. The preform may be preliminary heated before the drawing process, as described in JP-A 8-106015. In order to improve the bending and lateral-pressure characteristics, the breaking elongation and the hardness of the plastic optical fiber is controlled above the limit specified in JP-A 7-244220.

The plastic optical fiber, manufactured by the process above, is utilized for various purposes. For the purpose of protecting and/or reinforcing the plastic optical fiber, it is possible to cover the plastic optical fiber, to mix a fibrous layer to the plastic optical fiber, and/or to bundle plural plastic optical fibers.

In order to cover the plastic optical fiber with resin to produce a plastic optical fiber cable, for instance, the optical fiber strand goes through holes formed in a pair of dies faced to each other. While filling the molten resin in a space between the dies, the optical fiber strand is moved from one die to the other die, so that the optical fiber strand is covered with the molten resin layer. The thickness of the resin layer is dependent on the temperature of the molten resin, the speed of the optical fiber strand, and cooling speed of the molten resin. The resin layer protects the optical fiber strand from stress when the optical fiber is bent. The resin layer preferably covers the optical fiber strand without welding thereto, in order to decrease the stress to the optical fiber strand. The moving speed of the optical fiber is decided so as to reduce thermal damage by the molten resin during the covering process. A resin with low melting temperature is preferably used for the covering process. It is possible to utilize other known methods, such as the method to polymerize a monomer applied to the optical fiber strand, the method to wrap a sheet, and the method to insert the optical fiber strand in a hollow tube formed by extrusion.

There are mainly two covering structure of the plastic optical fiber cable, tightly covering structure and loosely covering structure. The optical fiber cable of tightly covering structure has a cover layer that is closely in contact with the optical fiber strand. In the optical fiber cable of loosely covering structure, a gap is formed between the cover layer and the optical fiber strand. When the cover layer is peeled off in order to connect the optical fiber cables, the optical fiber cable is damaged by moisture that fills the gap in the optical fiber cable from joint portions of the optical fiber cable. Thus, the tightly covering structure is preferable for a normal use. The loosely covering structure is preferably used for a certain purpose, since the cover layer away from the optical fiber strand can relax damage such as stress and heat. The gap in the optical fiber cable may be filled with a gel semi-solid or a gel powder with fluidity for moisture protection. The semi-solid and the gel powder may have other functions, such as heat-resistance and physical strength. The gap in the optical fiber of loosely covering structure is made by adjusting the position of an extrusion nipple in a cross head die and controlling the air pressure during the covering process. The size of the gap is adjusted by controlling the thickness of the extrusion nipple and the air pressure.

Another cover layer (secondary cover layer) is provided on the outer surface of the cover layer described above (primary cover layer), if necessary. The secondary cover layer may have materials such as a frame retardant, an ultraviolet light absorbent, an anti-oxidant, a trapping agent and a lubricant. Such materials may be added in the primary cover layer as long as the primary cover layer keeps its resistance against transmittance and humidity. Some frame retardants contain resins with halogen like bromine, additives and phosphorus. Recently, metal hydroxide is mainly used as the frame retardant for the purpose of reducing toxic gas emission. The metal hydroxide contains water of crystallization, which is not removed during the manufacture of the optical fiber cable. Thus, only the secondary cover layer preferably contains the metal hydroxide as the frame retardant.

The plastic optical fiber strand may be covered with plural cover layers with multiple functions. Examples of such cover layers are a frame retardant layer described above, a barrier layer to prevent moisture absorption, moisture absorbent (moisture absorption tape or gel, for instance) between the cover layers or in the cover layer, a flexible material layer and a styrene forming layer as shock absorbers, a reinforced layer to increase rigidity. The thermoplastic resin as the cover layer may contain structural materials to increase the strength of the optical fiber cable. The structural materials are a tensile strength fiber with high elasticity and/or a metal wire with high rigidity. Examples of the tensile strength fibers are an aramid fiber, a polyester fiber, a polyamid fiber. Examples of the metal wires are stainless wire, a zinc alloy wire, a copper wire. The structural materials are not limited to those listed above. It is also possible to provide other materials such as a metal pipe for protection, a support wire to hold the optical fiber cable. A mechanism to increase working efficiency in wiring the optical fiber cable is also applicable.

It is possible to form a bunch strand by bunching the optical fiber strands concentrically and a so-called tape core wire by arranging the optical fiber strands in parallel. It is also possible to collect the bunch strand and the tape core wire by use of a LAP sheath or a binder tape.

[Embodiments]

The optical characteristics of the plastic optical fibers are described in the following embodiments. The particulars, such as raw materials and forming conditions , in these embodiments do not unnecessary limit the present invention.

[Embodiment 1]

(Manufacturing the clad tube)

The clad tube as the plastic optical product is manufactured by use of the manufacture line 10 in FIG. 1. A proper amount of PMMA, supplied to the pellet hopper 16, is melted in the single axis screw extruder with bent, and extruded in the extrusion die 12 to form the soft clad 20. The polymerization degree of PMMA is 1000. The molecular weight of PMMA is 100,000. The glass transition temperature Tg of PMMA is 108 ° C. The temperature of the soft clad 20 is (Tg+70) °C to (Tg+120) °C. The apparent viscosity of the polymer at the exit 12a of the extrusion die 12 is 3000 to 4000 Pa·s. The soft clad 20 is fed to the molding die 13 at the extrusion speed S of 0.5 m/min.

The molding die 13 (See FIG. 3) with suction holes of substantially hemi-spherical shape (See FIG. 5C) is used for molding the soft clad 20 into the clad tube 21. The outer diameter d1 of the clad tube 21 is 20 mm, and the thickness d2 of the clad tube 21 is 5 mm. The air pressure in the decompression chamber 31 is 30 kPa. The plane angle θ of the throat member 18 is 45°. The distance L1 between the exit of the extrusion die 12 and the outer surface 18b of the throat member 18 is 15 mm. The clad tube 21 is cooled down in the cooler 14 of 2.5 m in length to obtain the plastic cylindrical tube (clad tube) formed from PMMA. The temperature of the coolant 41 in the cooler 14 is 15 °C.

(Manufacturing the preform)

A solution is prepared by mixing dehydrated MMA and low molecular weight compounds for refractive index distribution. The solution is filtered through a polytetrafluoroethylen membrane filter having an accuracy of 0.2 μm. Filtered solution is injected inside the PMMA cylindrical tube of 600 mm in length. The low molecular weight compound is diphenyl sulfide. The amount of added diphenyl sulfide is 11 percents by mass of MMA. The amount of di-t-butylperoxide as the polymerization initiator is 0.013 percent by mass of MMA**.** The amount of n-laurylmercaptan as the polymerization modifier is 0.27 percent by weight of MMA. After MMA with additives is injected, PMMA tube is inserted vertically in a glass tube provided in a pressurized polymerization chamber. The diameter of the hollow space of the glass tube is 2 mm larger than the outer diameter of the cylindrical tube. The core monomer (MMA) is polymerized for 48 hours at 120 °C under nitrogen atmosphere, so that the preform is obtained. The nitrogen pressure is 0.2 Mpa.

After heating the preform at 230 °C, the preform is drawn to obtain the plastic optical fiber of 750 μm in diameter and 600 m in length. The error in diameter of the plastic optical fiber is -15 μm to 15 μm. The transmission loss of the plastic optical fiber was measured by use of transmission light. The wavelength of transmission light is 650 nm. The measured transmission loss is 158 dB/km, which is closer to the theoretical limit (106 dB/km) than a conventional plastic optical fiber. The frequency range is measured to compare the data transmission ability with the conventional plastic optical fiber. The maximum value of the measured frequency range is 1.05 GHz/100m, which is better than that of the conventional plastic optical fiber (50 GHz/100m).

Mechanical strength of the plastic optical fiber is evaluated by measuring Young's modulus and joint strength. The measurement was carried out by use of the strograph MA (manufactured by Toyo Seiki Seisaku-sho, Ltd.). The joint strength was measured by detecting the load to the plastic optical fiber with a knot at the time of breakage while pulling upper and lower end portions of the plastic optical fiber. The sample of plastic optical fiber has 100 m in length. The upper and lower ends portions of about 10 m are held by a pair of chucks, respectively. The distance of the chucks are 50 mm, and only the upper chuck is pulled at a speed of 10 m/min.

The measured Young's modulus is 41.2 MPa, and the measured joint strength is 46.3 Mpa. The result shows that the plastic optical fiber manufactured by the method above has enough strength for practical use.

[Embodiment 2]

(Manufacturing the clad tube)

The manufacture line 10 in FIG. 1 is used for manufacturing the clad tube as the plastic optical product. The raw material in this embodiment is PVDF resin KF-#850 (manufactured by Kureha Chemical Industry Co. , Ltd.). The raw material, supplied in the pellet hopper 16, is melted in the single axis screw extruder with bent. The melting point (Tm) of the PVDF resin is 177 °C. The temperature T of the soft clad 20 satisfies the following relationship: Tm-30 = T = Tm+70. Preferably, the temperature T of the soft clad 20 is from 170 ° C to 200 ° C. Other manufacturing conditions are same as those in the Embodiment 1. The molten resin is extruded in the extrusion die to form the hollow cylindrical clad tube. The outer diameter d1 of the clad tube is 20 mm, and the thickness d2 is 5 mm.

(Formation of the core rod inside the clad tube)

A hollow part of a cylindrical glass tube is dehydrated so that the moisture of the hollow part is 100 ppm or less. The inner diameter of the glass tube is 10 mm. A solution is prepared by including additives in in methyl methacrylate (MMA). The additives are n-butylmercaptan as the chain transfer agent (molecular weight modifier) and benzoyl peroxide as the polymerization initiator. The amount of benzoyl peroxide is 0.5 percent by mass of MMA. The amount of n-butylmercaptan is 0.28 percent by weight of MMA. The MMA solution is subject to thermal polymerization while heating the glass tube at 70 ° C and rotating the glass tube at a speed of 3000 rpm. In this way, PMMA layer of 5 mm in thickness is formed on the inner surface of the glass tube.

Then, MMA as the core raw material is dehydrated to equal to and less than 100 ppm. A solution is prepared by adding diphenyl sulfide as the reafractive index modifier to MMA. The amount of diphenyl sulfide is 12.5 percent by mass of MMA. After filtering the solution through membrane filter having an accuracy of 0.2 $\mu$m, the solution is poured into the hollow part of the glass cylinder. The amount of di-t-butylperoxide as the polymerization initiator is 0.016 percent by mass of MMA. The amount of dodecylmercaptan as the polymerization modifier is 0.27 percent by weight of MMA. The glass tube containing MMA solution is disposed vertically in a pressurized polymerization chamber. The core monomer (MMA) is polymerized for 48 hours at 120 **°C** under nitrogen atmosphere. The nitrogen pressure is 0.2 MPa. Thereby, a cylindrical polymer with refractive index distribution is obtained. The cylindrical polymer is inserted in the PVDF clad tube to obtain the preform.

After heating the preform at 230 °C, the preform is drawn to obtain the plastic optical fiber of 750 $\mu$m in diameter and 300 m in length. During the drawing process, no bubble was generated. The measured transmission loss of the plastic optical fiber at a wavelength of 650 nm is 165 dB/km. The frequency range of the plastic optical fiber with a length of 100 m is 1.10 GHz.

Industrial Applicability

The present invention is applicable to a plastic optical product such as a plastic optical fiber. The present invention is also applicable to a graded index type plastic optical fiber.

**Claims**

1.  A method for manufacturing a plastic optical product, comprising the steps of:

    melting a polymer;
    extruding said polymer from an extrusion die (12) to obtain a hollow molten polymer;
    correcting the shape of said molten polymer through a molding die (13), and
    solidifying said molten polymer to obtain a plastic optical part having a hollow shape.

2.  A method according to claim 1, further comprising the steps of :

    driving a decompression pump (17) to decompress said molding die (13), said decompression pump (17) being connected to said molding die (13) through a plurality of holes formed in an inner surface of said molding die (13), whereby said molten polymer is tightly fit to said inner surface of said molding die (13).

3.  A method according to claim 1, wherein the extrusion speed of said molten polymer in said molding die (13) is equal to or more than 0.1 m/min and equal to or less than 10 m/min.

4.  A method according to claim 1, wherein the temperature of said molten polymer is equal to or more than (Tg+30) °C and equal to or less than (Tg+120) °C;
    wherein Tg is the glass transition temperature of said polymer.

5.  A method according to claim 1, wherein the apparent viscosity of said molten polymer near the exit of said extrusion die (12) is 500 to 10000 Pa·s.

6.  The method according to any one of claims 1 to 5, further comprising the steps of:

    injecting polymerizable material inside a hollow area of said plastic optical part; and
    polymerization hardening said polymerizable material.

7.  A method for manufacturing a plastic optical fiber comprising the step of:

    drawing said plastic optical product manufactured by the process of claim 6,

    wherein said plastic optical part is a clad of said plastic optical fiber, and said polymerized material is a core of said plastic optical fiber.

8.  An apparatus for manufacturing a plastic optical product in the shape of a hollow plastic optical part, comprising:

    means for melting a polymer;
    an extrusion die (12) to extrude said polymer to obtain a hollow molten polymer; and
    a molding die (13), disposed in the downstream side of said extrusion die (12), to correct the shape of said molten polymer.

9.  An apparatus according to claim 8, further comprising:

    a decompression pump (17) to decompress said molding die (13), said decompression pump (17) being connected to said molding die (13) through a plurality of holes formed in an inner surface of said molding die (13), whereby said molten polymer is tightly fit to said inner surface of said molding die (13).

10. An apparatus according to claim 9, wherein the air pressure at said inner surface of said molding die (13) is 20 kPa to 50 kPa.

11. An apparatus according to claim 8, further comprising a throat member (18) fixed to an entrance of said molding die (13).

12. An apparatus according to claim 8, further comprising means for cooling said molten polymer after passing said molding die (13).

13. An apparatus according to claim 8, wherein the following relationship is satisfied;

$$0 < L < 20$$

wherein L (mm) is the distance between an exit of said extrusion die (12) and an entrance of said molding die (13).


**Patentansprüche**

1.  Verfahren zur Herstellung eines optischen Kunststoffprodukts, folgende Schritte aufweisend:

    Schmelzen eines Polymers;
    Extrudieren des Polymers aus einem Extrusionswerkzeug (12), um ein hohles geschmolzenes Polymer zu erhalten;
    Korrigieren der Form des geschmolzenen Polymers durch ein Formungswerkzeug (13), und
    Festwerdenlassen des geschmolzenen Polymers, um ein optisches Kunststoffteil mit einer hohlen Form zu erhalten.

2.  Verfahren nach Anspruch 1, außerdem folgende Schritte aufweisend:

    Betreiben einer Dekompressionspumpe (17), um das Formungswerkzeug (13) zu dekomprimieren, wobei die Dekompressionspumpe (17) durch eine Mehrzahl von Löchern, die in einer inneren Oberfläche des Formungswerkzeugs (13) ausgebildet sind, mit dem Formungswerkzeug (13) verbunden ist, wodurch das geschmolzene Polymer dicht an die innere Oberfläche des Formungswerkzeugs (13) angelegt wird.

3.  Verfahren nach Anspruch 1, bei dem die Extrusionsgeschwindigkeit des geschmolzenen Polymers in dem Formungswerkzeug (13) gleich oder größer als 0,1 m/min. und gleich oder kleiner als 10 m/min. ist.

**4.** Verfahren nach Anspruch 1, bei dem die Temperatur des geschmolzenen Polymers gleich oder größer als (Tg+30) °C und gleich oder kleiner als (Tg+120) °C ist;
wobei Tg die Glasübergangstemperatur des Polymers ist.

**5.** Verfahren nach Anspruch 1, bei dem die scheinbare Viskosität des geschmolzenen Polymers nahe dem Ausgang des Extrusionswerkzeugs (12) 500 bis 10000 Pa·s beträgt.

**6.** Verfahren nach einem der Ansprüche 1 bis 5, außerdem folgende Schritte aufweisend:

Einspritzen eines polymerisierbaren Materials ins Innere eines hohlen Bereichs des optischen Kunststoffteiles; und
Polymerisationshärten des polymerisierbaren Materials.

**7.** Verfahren zur Herstellung einer optischen Kunststofffaser, folgende Schritte aufweisend:

Verstrecken des nach dem Verfahren von Anspruch 6 hergestellten optischen Kunststoffprodukts,

wobei das optische Kunststoffteil eine Hülle der optischen Kunststofffaser ist und das polymerisierte Material ein Kern der optischen Kunststofffaser ist.

**8.** Vorrichtung zur Herstellung eines optischen Kunststoffprodukts in der Form eines hohlen optischen Kunststoffteiles, aufweisend:

Mittel zum Schmelzen eines Polymers;
ein Extrusionswerkzeug (12) zum Extrudieren des Polymers, um ein hohles geschmolzenes Polymer zu erhalten; und
ein Formungswerkzeug (13), das an der stromabwärtigen Seite des Extrusionswerkzeugs (12) angeordnet ist, um die Form des geschmolzenen Polymers zu korrigieren.

**9.** Vorrichtung nach Anspruch 8, außerdem aufweisend:

eine Dekompressionspumpe (17), um das Formungswerkzeug (13) zu dekomprimieren, wobei die Dekompressionspumpe (17) durch eine Mehrzahl von Löchern, die in einer inneren Oberfläche des Formungswerkzeugs (13) ausgebildet sind, mit dem Formungswerkzeug (13) verbunden ist, wodurch das geschmolzene Polymer dicht an die innere Oberfläche des Formungswerkzeugs (13) angelegt wird.

**10.** Vorrichtung nach Anspruch 9, bei der der Luftdruck an der inneren Oberfläche des Formungswerkzeugs (13) 20 kPa bis 50 kPa beträgt.

**11.** Vorrichtung nach Anspruch 8, außerdem aufweisend ein Einlaufelement (18), das an einem Eingang des Formungswerkzeugs (13) fixiert ist.

**12.** Vorrichtung nach Anspruch 8, außerdem aufweisend Mittel zum Kühlen des geschmolzenen Polymers nach dem Durchgang durch das Formungswerkzeug (13).

**13.** Vorrichtung nach Anspruch 8, bei der die folgende Beziehung erfüllt ist;

$$0 < L < 20$$

worin L (mm) der Abstand zwischen einem Ausgang des Extrusionswerkzeugs (12) und einem Eingang des Formungswerkzeugs (13) ist.

**Revendications**

**1.** Procédé de fabrication d'un produit optique en plastique, comprenant les étapes consistant à :

faire fondre un polymère ;
extruder ledit polymère à partir d'une filière d'extrusion (12) afin d'obtenir un polymère fondu creux ;
corriger la forme dudit polymère fondu par le biais d'une filière de moulage (13), et
solidifier ledit polymère fondu afin d'obtenir une pièce optique en plastique ayant une forme creuse.

2. Procédé selon la revendication 1, comprenant en outre les étapes consistant à :

   entraîner une pompe de décompression (17) afin de décompresser ladite filière de moulage (13), ladite pompe de décompression (17) étant reliée à ladite filière de moulage (13) par le biais d'une pluralité de trous formés dans une surface intérieure de ladite filière de moulage (13), moyennant quoi ledit polymère fondu se place fermement sur ladite surface intérieure de ladite filière de moulage (13).

3. Procédé selon la revendication 1, dans lequel la vitesse d'extrusion dudit polymère fondu dans ladite filière de moulage (13) est égale ou supérieure à 0,1 m/min et égale ou inférieure à 10 m/min.

4. Procédé selon la revendication 1, dans lequel la température dudit polymère fondu est égale ou supérieure à (Tg+30) °C et égale ou inférieure à (Tg+120)°C ;
   où Tg est la température de transition vitreuse dudit polymère.

5. Procédé selon la revendication 1, dans lequel la viscosité apparente dudit polymère fondu près de la sortie de ladite filière d'extrusion (12) est de 500 à 10000 Pa*s.

6. Procédé selon l'une quelconque des revendications 1 à 5, comprenant en outre les étapes consistant à :

   injecter un matériau polymérisable à l'intérieur d'une zone creuse de ladite pièce optique en plastique ; et durcir par polymérisation ledit matériau polymérisable.

7. Procédé de fabrication d'une fibre optique en plastique comprenant l'étape consistant à :

   étirer ledit produit optique en plastique fabriqué par le processus de la revendication 6,

   où ladite pièce optique en plastique est une gaine de ladite fibre optique en plastique, et ledit matériau polymérisé est un noyau de ladite fibre optique en plastique.

8. Appareil de fabrication d'un produit optique en plastique ayant la forme d'une pièce optique en plastique creuse, comprenant :

   un moyen permettant de faire fondre un polymère ;
   une filière d'extrusion (12) permettant d'extruder ledit polymère afin d'obtenir un polymère fondu creux ; et
   une filière de moulage (13), disposée sur le côté aval de ladite filière d'extrusion (12), permettant de corriger la forme dudit polymère fondu.

9. Appareil selon la revendication 8, comprenant en outre :

   une pompe de décompression (17) permettant de décompresser ladite filière de moulage (13), ladite pompe de décompression (17) étant reliée à ladite filière de moulage (13) par le biais d'une pluralité de trous formés dans une surface intérieure de ladite filière de moulage (13), moyennant quoi ledit polymère fondu est fermement placé sur ladite surface intérieure de ladite filière de moulage (13).

10. Appareil selon la revendication 9, dans lequel la pression de l'air au niveau de ladite surface intérieure de ladite filière de moulage (13) est de 20 kPa à 50 kPa.

11. Appareil selon la revendication 8, comprenant en outre un élément d'étranglement (18) fixé sur une entrée de ladite filière de moulage (13).

12. Appareil selon la revendication 8, comprenant en outre un moyen permettant de refroidir ledit polymère fondu après qu'il soit passé dans ladite filière de moulage (13).

**13.** Appareil selon la revendication 8, dans lequel la relation suivante est satisfaite :

$$0 < L < 20$$

Où L (mm) est la distance entre une sortie de ladite filière d'extrusion (12) et une entrée de ladite filière de moulage (13).

# FIG. 1

EP 1 509 380 B1

# FIG. 2

FIG. 3

# FIG. 4

# FIG. 5A

63
63a

# FIG. 5B

64
64a

# FIG. 5C

65
65a

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016504 A
- JP 9133818 A
- JP 8201637 A
- EP 0629493 A
- JP 08054520 A
- US 3472921 A
- RU 2176596 C1
- WO 9308488 A
- JP 9269424 A
- JP 10123350 A
- JP 2002090571 A
- JP 2001074971 A
- JP 2000329962 A
- JP 2001074966 A
- JP 2001074968 A

- JP 2001318263 A
- JP 001311840 A
- JP 2000241655 A
- JP 2002062457 A
- JP 2002101044 A
- JP 2001305395 A
- JP 2002023011 A
- JP 2001086537 A
- JP 002026815 A
- JP 2001339554 A
- JP 2001339555 A
- JP 7234322 A
- JP 7234324 A
- JP 8106015 A
- JP 7244220 A